# EUROPÄISCHE PATENTSCHRIFT

(11) **EP 0 866 025 B1**
(45) Veröffentlichungstag und Bekanntmachung des Hinweises auf die Patenterteilung: **19.10.2005**
(21) Anmeldenummer: 98102392.2
(22) Anmeldetag: 12.02.1998
(51) Int. Cl.: B66F 7/06, B66F 17/00

(54) **Hubeinrichtung mit einer Absturzsicherung und Haltevorrichtung**
Lift installation with a fall-prevention device and arresting device
Installation de levage avec sécurité anti-chute et dispositif d'arrêt

(30) Priorität: 19.03.1997 DE 19711451
(43) Veröffentlichungstag der Anmeldung: 23.09.1998
(73) Patentinhaber: Otto Nussbaum GmbH & Co. KG, 77694 Kehl (DE)
(72) Erfinder: Nussbaum, Hans Dipl.-Ing., 77694 Kehl-Sundheim (DE)
(74) Vertreter: Brommer, Hans Joachim

(56) Entgegenhaltungen:
- WO-A-94/14695
- DE-A- 2 909 171
- DE-A- 4 343 685
- US-A- 3 858 688

## Beschreibung

Die Erfindung betrifft eine Absturzsicherung und Haltevorrichtung für eine Hubeinrichtung, insbesondere Hebebühne, bei deren Hubbewegung eine Relativbewegung zwischen einer Gewindespindel und einer damit in Eingriff stehenden, leichtgängigen Fangmutter erzeugt und die Fangmutter in Rotation versetzt wird, wobei ab Überschreiten einer bestimmten Absenkgeschwindigkeit der Hubeinrichtung die Fangmutter in Wirkverbindung mit einem Bremselement gelangt und abgebremst wird.

Eine derartige Absturzsicherung und Haltevorrichtung ist durch die DE 43 43 685 bekannt. Dabei ist die Fangmutter in einem die Hubbewegung durchführenden Schlitten angeordnet und zwischen zwei oben bzw. unten angreifenden Druckfedern elastisch verspannt. Diese Druckfedern haben die Aufgabe, die Fangmutter bei Normalbetrieb gegenüber dem ebenfalls in dem genannten Schlitten angeordneten Bremselement zu distanzieren. Kommt es hingegen zu einer unerwünscht schnellen Absenkbewegung, etwa bei Ausfall des Hydraulikdruckes für die Hubvorrichtung, so kann sich die Fangmutter aufgrund ihres Trägheitsmomentes nur vergleichsweise langsam an der Gewindespindel herunterschrauben, so daß sie in Anlage mit dem Bremselement gelangt, abgebremst wird und die Hubeinrichtung arretiert.

Dieses bekannte System hat sich inzwischen in zahlreichen Anwendungsfällen bewährt, es soll aber durch die vorliegende Erfindung weiter vervollkommnet werden. Dabei soll insbesondere die Ansprechgeschwindigkeit der Absturzsicherung und Haltevorrichtung erhöht werden. Darüber hinaus soll sich der erfindungsgemäße Vorschlag durch eine konstruktiv vorteilhafte Anordnung auszeichnen.

Diese Aufgabe wird durch die Merkmale des Anspruchs 1 gelöst.

Die vorliegende Erfindung verzichtet also bewußt auf die im bekannten Fall vorgesehene Distanzierung zwischen Fangmutter und Bremselement sondern hält diese Teile in Anlage aneinander, so daß bei einem Schlauchbruch oder sonstigem Druckmittelausfall die Blockierung der Hubeinrichtung sofort und ohne vorherige Absenkbewegung gewährleistet ist.

Zur Einleitung der Absenkbewegung ist die Fangmutter aus ihrer Anlage am Bremselement abhebbar, damit die Selbsthemmung aufgehoben wird. Dieses Abheben erfolgt durch Stellglieder, die bei Betätigung des Absenkschalters automatisch aktiviert werden, bevor die eigentliche Absenkbewegung stattfindet. Diese Stellglieder können elektrisch, hydraulisch oder auf andere Weise betätigt werden. Die dabei durchzuführenden Stellwege bewegen sich im Millimeterbereich, weil es nur darauf ankommt, die Fangmutter aus ihrem Reibschluß mit dem Bremselement zu lösen.

Die Tatsache, daß die Fangmutter zumindest bei Stillstand der Hubeinrichtung am Bremselement anliegt, umfaßt den wichtigsten Zustand der Hubeinrichtung, nämlich dann, wenn in angehobenem Zustand unter der Hubeinrichtung gearbeitet wird. Das rasche Ansprechen der Fangmutter kommt aber auch beim Hochfahren der Hubeinrichtung zum tragen, denn dazu braucht sie lediglich elastisch in Richtung auf das Bremselement vorgespannt und diese Vorspannung so gewählt werden, daß die beim Hochfahren auf die Fangmutter durch Reibung an der Gewindespindel erzeugte Hubkraft nur noch zu einem Abheben der Fangmutter vom Bremselement um einige Zehntel Millimeter führt. Dadurch ist auch während des Hochfahrens der Hubeinrichtung beim Ausfall des Öldruckes nur noch eine unmerkliche Absenkbewegung möglich, bis die Fangmutter auf dem Bremselement aufsitzt.

Ein weiterer Vorteil der Erfindung besteht darin, daß die Fangmutter bei einem Druckmittelausfall bei stillstehender Hebebühne aufgrund der entweder überhaupt nicht mehr vorhandenen oder nur noch wenige Zehntel Millimeter betragenden Absenkbewegung nicht mehr in Rotation versetzt wird und demzufolge auch keine Rotationsenergie aufbauen kann, die am Bremselement vernichtet werden muß. Dadurch wird die Ansprechgeschwindigkeit des erfindungsgemäßen Systems nochmals verbessert.

Besonders zweckmäßig ist es dabei, das Abheben der Fangmutter dadurch herbeizuführen, daß die Gewindespindel eine minimale Wegstrecke in Abheberichtung, also im Sinne eines Hochfahrens der Hubeinrichtung durchführt und daß erst danach die vorgenannten Stellglieder aktiviert werden, um die Fangmutter in einem gewissen Abstand vom Bremselement zu halten. Dadurch brauchen die Stellglieder nur sehr geringe Kräfte erzeugen, wogegen der hohe Kraftaufwand für das Lösen der Fangmutter aus ihrer reibschlüssigen Anlage durch den ohnehin vorhandenen und entsprechend dimensionierten Antrieb der Hubeinrichtung erfolgt.

Damit die Fangmutter die beschriebene Abhebebewegung durchführen kann, ist sie vorzugsweise an einem die Gewindespindel umgebenden Führungselement gelagert, und zwar derart, daß sie relativ zu diesem Führungselement verdrehbar und axial verstellbar ist.

Grundsätzlich bestehen für den Antrieb der Hubeinrichtung alle bekannten Möglichkeiten; besonders günstig ist es jedoch, wenn die Gewindespindel als Kolbenstange eines Zylinder-Kolbenaggregates ausgebildet ist und der Zylinder das Bremselement sowie die ihm gegenüber verdrehbare und axial verstellbare Fangmutter trägt. Auch die zum Ausheben der Fangmutter aus ihrer Bremsposition dienenden Stellglieder sind zweckmäßig an diesem Zylinder angeordnet. Man erhält dadurch einen äußerst kompakten und kostengünstigen Aufbau.

Die Stellglieder zum Ausheben der Fangmutter können hydraulisch angetrieben und über Schaltventile an den Druckmittelkreis des Zylinderkolbenaggregates angeschlossen werden, so daß ein plötzlicher Druckmittelabfall auch die Aushebewirkung zunichte macht, die Absturzsicherung also sofort ansprechen kann. Stattdessen können die Stellglieder aber auch pneumatisch oder elektrisch betätigt werden.

Eine besonders günstige Weiterbildung der Erfindung besteht darin, die Fangmutter oder ein von ihr angetriebenes Teil zusätzliches Teil auch als Signalgeber für ein Wegmeßgerät auszubilden. Da die Verdrehung der Fangmutter in einem bestimmten Verhältnis zur Hubbewegung steht, läßt sich die jeweilige Hubposition sehr genau erfassen. Der Signalgeber kann dabei optisch - etwa durch eine Strichmarkierung - oder vorteilhafterweise induktiv die wegabhängigen Signale erzeugen.

In zahlreichen Anwendungsfällen sind mehrere Hubeinrichtungen für das Anheben einer bestimmten Last miteinander kombiniert; in einem solchen Fall können die jeweiligen Wegmeßgeräte an einen gemeinsamen Regelkreis zur Gleichlaufsteuerung der beteiligten Hubeinrichtungen angeschlossen werden. Auf diese Weise ist sichergestellt, daß alle angeschlossenen Hubeinrichtungen gleich schnell nach oben oder unten fahren.

Weitere Merkmale und Vorteile der Erfindung ergeben sich aus der nachfolgenden Beschreibung eines Ausführungsbeispieles anhand der Zeichnung; dabei zeigt
- Figur 1: die Anwendung der Absturzsicherung und Haltevorrichtung an einer in Schrägansicht dargestellten Kraftfahrzeug-Hebebühne;
- Figur 2: die Absturzsicherung und Haltevorrichtung kombiniert mit einem den Antrieb der Hubeinrichtung bildenden Zylinder-Kolbenaggregat in einem Axialschnitt;
- Figur 3: das Detail X aus Figur 2 in vergrößerter Darstellung;
- Figur 4: den gleichen Schnitt wie Figur 3, jedoch bei abgehobener Fangmutter;
- Figur 5: ein Schrägbild ähnlich Figur 2, jedoch mit kombiniertem Wegmeßsystem.

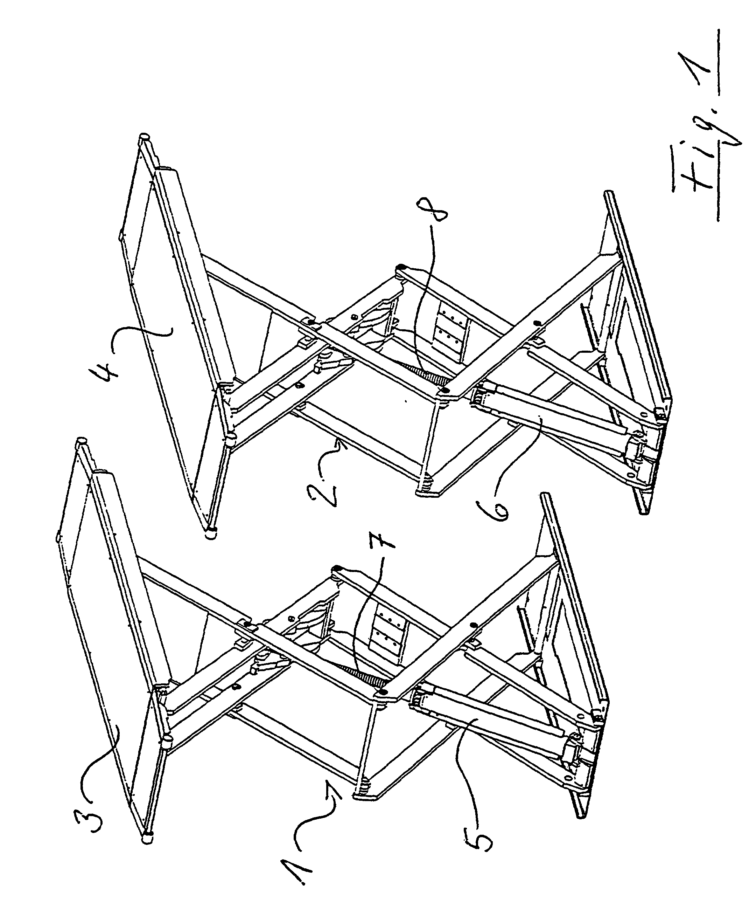

Bei dem Ausführungsbeispiel in Figur 1 wird die Erfindung bei einer Kfz-Hebebühne angewendet, die aus zwei nebeneinander angeordneten Scherengestellen 1 und 2 besteht. Beide Scherengestelle tragen oben eine Auffahrplattform 3 bzw. 4, die in Anlage mit dem linken bzw. rechten Längsholm des anzuhebenden Fahrzeuges gelangt. Der Antrieb der Scherengestelle erfolgt durch einen an der Basis der Scherengestelle angelenkten Hydraulikzylinder 5 bzw. 6, dessen Kolbenstange 7 bzw. 8 an den oberen Scherenhebeln angreift.

Die beschriebene Hebebühne ist insoweit bekannt, so daß sie nicht weiter im Detail beschrieben zu werden braucht. Im übrigen ist die erfindungsgemäße Absturzsicherung und Haltevorrichtung auch für beliebige andere Hubeinrichtungen geeignet; gleichermaßen kann das Zylinderkolbenaggregat durch andere Antriebsquellen ersetzt werden.

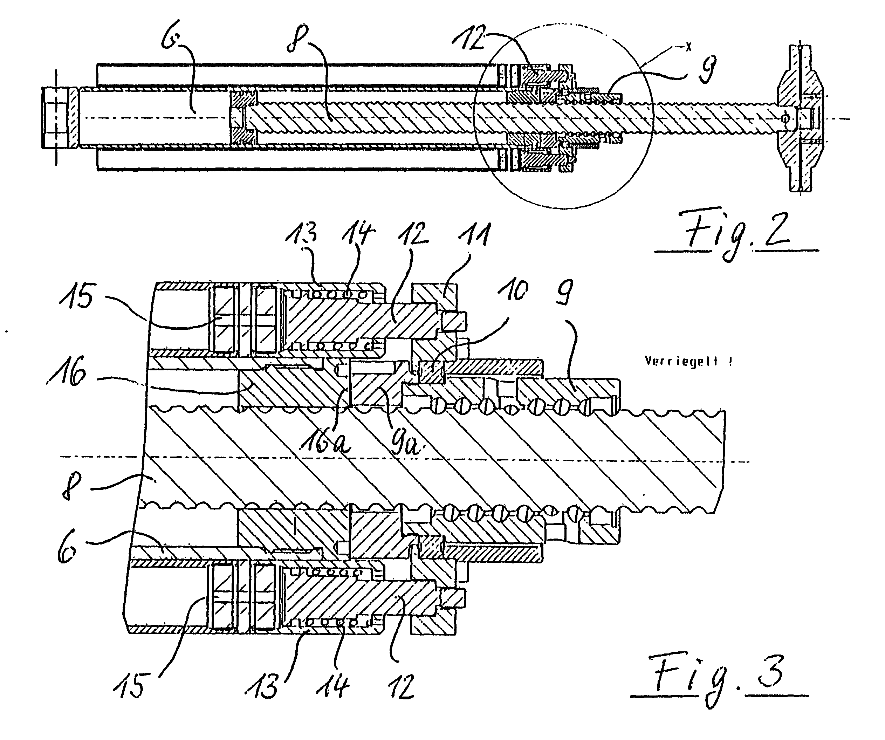

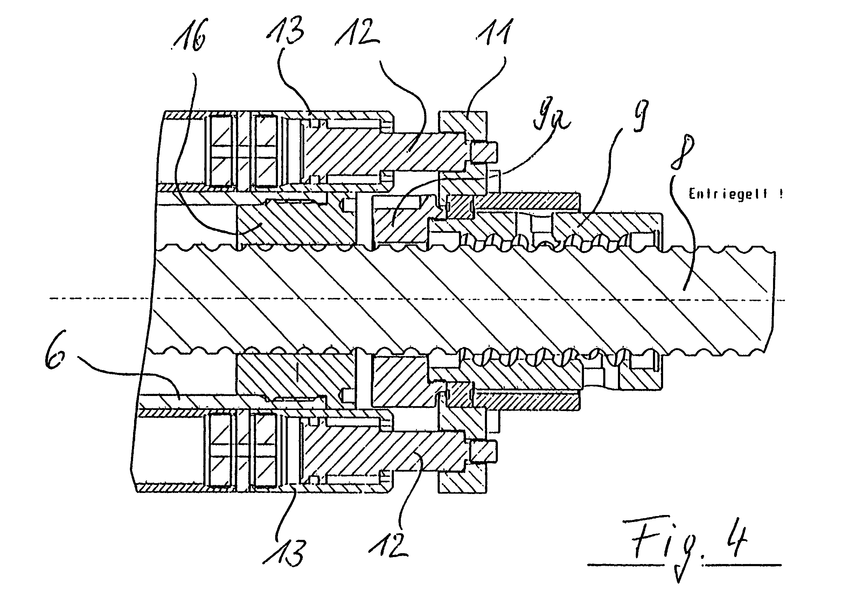

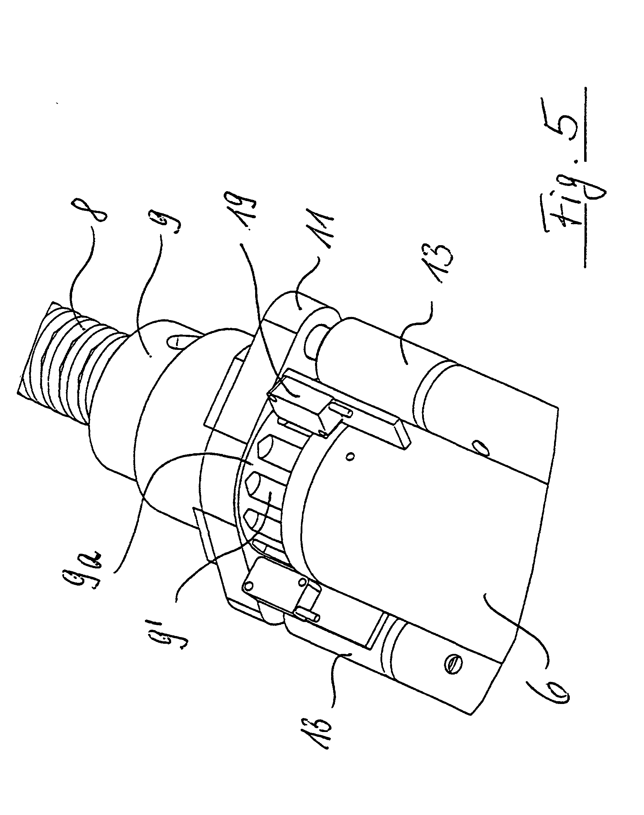

Wie vor allem die Figuren 2 und 3 am Beispiel des Hydraulikzylinders 6 zeigen, ist dessen Kolbenstange 8 als Gewindespindel ausgebildet. Ihr Außengewinde ist als leichtgängiges Bewegungsgewinde ausgebildet und steht über eine Vielzahl in den Gewindegängen angeordneter Kugeln mit einer Fangmutter 9 in Eingriff. Diese Fangmutter ist ihrerseits über ein Kugellager 10 verdrehbar in einem führungselement, zweckmäßig einem Stellring 11 gelagert. Dieser Stellring ist über Stellglieder in Form zweier Hubkolben 12 axial verschiebbar zwischen der in Figur 3 gezeichneten Bremsstellung und der in Figur 4 gezeichneten abgehobenen Stellung am Zylinder 6 gelagert.

Die Hubkolben 12 sind jeweils in Aushubzylindern 13 geführt und durch Federn 14 in Richtung auf die Bremsposition belastet. In Gegenrichtung können sie über jeweils eine Bohrung 15 im Boden des Aushubzylinders mit Druckmittel beaufschlagt werden.

Die Aushubzylinder 15 sind an der Außenseite des Hydraulikzylinders 6 fest montiert. Außerdem weist der Zylinder 6 an seiner ortsfesten Führungsbüchse 16 für die Gewindespindel stirnseits außenliegend eine sich radial erstreckende Reibfläche 16a auf. Diese Reibfläche fungiert als Bremselement für eine an der Fangmutter 9 festgelegte, sich ebenfalls radial erstreckende Gegenreibscheibe 9a. Letztere kann direkt an der Fangmutter 9 oder als separates Bauteil ausgebildet sein. Wesentlich ist nur, daß die Gegenreibscheibe 9a weitgehend starr mit der Fangmutter 9 verbunden ist, insbesondere also deren Verdrehung mitmachen muß. Zur Unterstützung der Bremswirkung kann das Bremselement 16a und/oder die Gegenreibscheibe 9a mit einem speziellen Bremsbelag versehen sein.

Die Funktion ist folgende: Soll die Hubeinrichtung angehoben werden, so wird der Hydraulikzylinder 6 mit Druckmittel beaufschlagt, so daß die als Gewindespindel 8 ausgebildete Kolbenstange hochfährt. Dabei wird die Fangmutter 9 von dem Bremselement 16 etwas abgehoben, bis die Gegenkraft der Druckfedern 14 den reibungsbedingten Drehwiderstand der Fangmutter 9 überwiegt. Dies ist aufgrund der Kugellagerung der Fangmutter an der Gewindespindel 8 wie auch am Stellring 11 frühzeitig der Fall, so daß nur eine minimale, kaum sichtbare Abhebbewegung eintritt. Der weitere Hub der Gewindespindel 8 wird dann durch reine Drehbewegung der Fangmutter 9 aufgenommen.

Kommt es während dieser Hubbewegung zu einem Druckabfall in einem Hydraulikzylinder 6 so wird die Gewindespindel 8 durch die angehobene Last nach unten gedrückt und demgemäß wird die Fangmutter 9 mit ihrer Gegenreibscheibe 9a gegen das Bremselement 16 gedrückt. Dadurch wird ihre Verdrehbarkeit blockiert und die Gewindespindel 8 in der erreichten Position festgehalten. Dieser Vorgang wird noch dadurch beschleunigt, daß sich die Fangmutter 9 aufgrund ihrer Rotationsenergie in der während des Anhebens der Hubvorrichtung erzeugten Drehrichtung weiterdrehen will und sich somit schon dann in Richtung auf das Bremselement 16 herunterschraubt, wenn die Gewindespindel 8 ihre Hubgeschwindigkeit stark verringert. Auf diese Weise ist das beim Stand der Technik in Kauf zu nehmende kurzzeitige, ruckhafte Absinken der Hubeinrichtung bis zum Greifen der Fangmutter vollkommen beseitigt, wenn sich die Hubeinrichtung in Arbeitsstellung befindet oder hochgefahren wird.

Zum Absenken der Hubeinrichtung muß die Fangmutter 9 zunächst aus ihrer Verspannung mit dem Bremselement 16 gelöst werden. Dazu wird zunächst der Zylinder 6 kurzzeitig mit Druck beaufschlagt und sobald die Anpressung der Fangmutter 9 am Bremselement 16 aufgehoben ist, treten die vergleichsweise schwach dimensionierten Aushubzylinder 13 in Aktion und verfahren den Stellring in die in Figur 4 dargestellte Position, wobei der Abstand zwischen Fangmutter und Bremselement dort etwas größer als in Wirklichkeit dargestellt ist. Sobald dieser Zustand erreicht ist, wird der Druck im Hydraulikzylinder 6 reduziert und die Absenkbewegung der Hubeinrichtung eingeleitet. Die Fangmutter 9 rotiert dabei in umgekehrter Richtung, wird aber durch die Aushubzylinder 13 jeweils in einem gewissen Sicherheitsabstand vom Bremselement gehalten. Die beschriebenen Vorgänge laufen automatisch ab, wenn der Schalter für die Absenkbewegung betätigt wird.

Kommt es während der Absenkbewegung zu einem Schlauchbruch oder dergleichen, so werden die Aushubzylinder, die an den gleichen Druckmittelkreislauf wie der Hydraulikzylinder 6 angeschlossen sein können, oder die separat geschaltet sind, drucklos, so daß sie nicht mehr in der Lage sind, die Fangmutter in abgehobener Stellung zu halten. Vielmehr wird sie durch die Federn 14 sowie durch die rasch absinkende Gewindespindel 8 nach unten gegen das Bremselement 16 gedrückt, so daß die weitere Absenkbewegung wieder durch Selbsthemmung blockiert ist.

Im Ausführungsbeispiel wird die Bewegung der Fangmutter auf das Bremselement jeweils noch durch die Schwerkraft unterstützt. Es ist aber selbstverständlich auch möglich, das Zylinder-Kolbenaggregat umgekehrt einzubauen.

Figur 5 zeigt schließlich noch die Verwendung der Fangmutter 9 als Geber für ein Wegmeßsystem. Dazu ist sie an ihrem äußeren Umfang mit einer Vielzahl axialer Nuten oder Rippen 9' versehen, die induktiv von Sensoren 19 erfaßt und gezählt werden. Dadurch kann der Drehweg der Fangmutter ermittelt und daraus der Hubweg der Gewindespindel 8 abgeleitet werden.

Damit auch die Drehrichtung, also die Hubrichtung erkannt wird, sind zwei Sensoren an verschiedenen Stellen des Umfanges angeordnet.

Falls es auf den Gleichlauf mehrerer miteinander kombinierter Zylinder-Kolbenaggregate ankommt, sind die Sensoren mit ihrer Auswerteschaltung an einen Regelkreis zur Gleichlaufsteuerung angeschlossen, damit jedes Zylinder-Kolbenaggregat die gleiche Hubgeschwindigkeit aufweist bzw. die gleiche Hubposition anfährt.

Abschließend sei noch darauf hingewiesen, daß durch die erfindungsgemäße Konstruktion die Last reibschlüssig an der Hubeinrichtung, namentlich am Hubzylinder abgestützt wird, so daß der Hydraulikdruck keine tragende Funktion mehr hat; dadurch fällt der Federungseffekt der Hydrauliksäule, insbesondere bei Hintereinanderschaltung mehrerer Hydraulikzylinder weg und das Gesamtsystem wird wesentlich steifer als bisher.

## Patentansprüche

1. Hubeinrichtung mit einer Absturzsicherung und Haltevorrichtung, insbesondere Hebebühne, bei deren Hubbewegung eine Relativbewegung zwischen einer Gewindespindel (8) und einer damit in Eingriff stehenden, leichtgängigen Fangmutter (9) erzeugt und die Fangmutter (9) in Rotation versetzt wird, wobei ab Überschreiten einer bestimmten Absenkgeschwindigkeit der Hubeinrichtung die Fangmutter (9) in Wirkverbindung mit einem Bremselement (16) gelangt und abgebremst wird, wobei die Fangmutter (9) zumindest bei Stillstand der Hubeinrichtung in reibschlüssiger Anlage an dem Bremselement (16) gehalten wird, wobei die Fangmutter (9) vor Durchführung der Absenkbewegung der Hubeinrichtung aus ihrer Anlage am Bremselement (16) abhebbar ist und das Abheben der Fangmutter (9) aus ihrer Bremsposition durch beim Absenken automatisch aktivierte Stellglieder (12, 13) erfolgt.

2. Vorrichtung nach Anspruch 1,
**dadurch gekennzeichnet,**
**daß** die Fangmutter (9) elastisch in Richtung auf das Bremselement (16) belastet ist und diese Belastung beim Hochfahren der Hubeinrichtung ein Abheben der Fangmutter (9) vom Bremselement (16) nur um wenige Millimeter, vorzugsweise nur um einige Zehntel Millimeter gestattet.

3. Vorrichtung nach Anspruch 1,
**dadurch gekennzeichnet,**
**daß** die Fangmutter (9) an einem die Gewindespindel umgebenden Führungselement (11) verdrehbar und axial verstellbar angeordnet ist.

4. Vorrichtung nach Anspruch 1,
**dadurch gekennzeichnet,**
**daß** die Gewindespindel (8) als Kolbenstange eines Hydraulikzylinders (6) ausgebildet ist.

5. Vorrichtung nach Anspruch 4,
**dadurch gekennzeichnet,**
**daß** der Hydraulikzylinder (6) das Bremselement (16) und die ihm gegenüber verdrehbare und axial verstellbare Fangmutter (9) trägt.

6. Vorrichtung nach Anspruch 4,
**dadurch gekennzeichnet,**
**daß** das Ausheben der Fangmutter (9) aus ihrer Bremsposition durch zumindest einen Aushubzylinder (13) erfolgt.

7. Vorrichtung nach Anspruch 1,
**dadurch gekennzeichnet,**
**daß** die Fangmutter (9) oder ein von ihr mitgedrehtes Teil als Signalgeber für ein Wegmeßgerät (19) ausgebildet ist.

8. Vorrichtung nach Anspruch 7,
**dadurch gekennzeichnet,**
**daß** die Wegmeßgeräte (19) mehrerer miteinander kombinierter Hubeinrichtungen an einen gemeinsamen Regelkreis zur Gleichlaufsteuerung der Hubeinrichtungen angeschlossen sind.

## Claims

1. Lifting arrangement with a fall-prevention device and retaining device, in particular a lifting platform, during the lifting movement of which a relative movement is generated between a threaded spindle (8) and an easy-action trap nut (9) in engagement therewith and the trap nut (9) is set in rotation, wherein as soon as a specific lowering speed of the lifting arrangement is exceeded the trap nut (9) comes into operative connection with a brake element (16) and is braked, wherein the trap nut (9) is held in frictional engagement on the brake element (16) at least when the lifting arrangement is stationary, wherein before the lowering movement of the lifting arrangement is carried out the trap nut (9) can be lifted out of its engagement on the brake element (16) and the lifting off of the trap nut (9) from its braked position is carried out by control members (12, 13) which are automatically activated during lowering.

2. Device as claimed in Claim 1, **characterised in that** the trap nut (9) is resiliently loaded in the direction of the brake element (16) and during raising of the lifting arrangement this loading allows lifting off of the trap nut (9) from the brake element (16) only by a few millimetres, preferably only by a few tenths of a millimetre.

3. Device as claimed in Claim 1, **characterised in that** the trap nut (9) is disposed so as to be rotatable and axially adjustable on a guide element (11) surrounding the threaded spindle.

4. Device as claimed in Claim 1, **characterised in that** the threaded spindle (8) is constructed as the piston rod of a hydraulic cylinder (6).

5. Device as claimed in Claim 4, **characterised in that** the hydraulic cylinder (6) supports the brake element (16) and the trap nut (9) which is rotatable and axially adjustable relative thereto.

6. Device as claimed in Claim 4, **characterised in that** the lifting off of the trap nut (9) from its braked position is carried out by at least one lifting cylinder (13).

7. Device as claimed in Claim 1, **characterised in that** the trap nut (9) or a part co-rotated by it is constructed as a signal emitter for a path measuring device (19).

8. Device as claimed in Claim 7, **characterised in that** the path measuring devices (19) of a plurality of lifting arrangements combined with one another are connected to a common control circuit for synchronised control of the lifting arrangements.

## Revendications

1. Installation de levage avec sécurité antichute et dispositif de retenue, notamment pont élévateur, dans lequel le déplacement de levage génère un déplacement relatif entre une tige filetée (8) et un écrou d'arrêt (9) manoeuvrable, en prise avec ladite tige, et l'écrou d'arrêt (9) est déplacé en rotation, l'écrou d'arrêt (9), à partir du moment où une vitesse d'abaissement définie du système de levage est dépassée, parvenant en liaison fonctionnelle avec un élément de freinage (16) et étant freiné, l'écrou d'arrêt (9) étant maintenu au moins à l'arrêt du système de levage en appui entraîné par friction contre l'élément de freinage (16), l'écrou d'arrêt (9) pouvant être soulevé de son appui contre l'élément de freinage (16) avant de réaliser le déplacement d'abaissement du système de levage et le soulèvement de l'écrou d'arrêt (9) depuis sa position de freinage s'effectuant par des actionneurs (12, 13) activés automatiquement à l'occasion de l'abaissement.

2. Dispositif selon la revendication 1,
**caractérisé en ce que**
l'écrou d'arrêt (9) est sollicité de manière élastique en direction de l'élément de freinage (16) et cette sollicitation, à l'occasion du déplacement vers le haut du système de levage, ne permettant un soulèvement de l'écrou d'arrêt (9) depuis l'élément de freinage (16) que de quelques millimètres, de préférence que de quelques dixièmes de millimètres.

3. Dispositif selon la revendication 1,
**caractérisé en ce que**
l'écrou d'arrêt (9) est disposé de manière rotative et réglable dans le sens axial sur un élément de guidage (11) entourant la tige filetée.

4. Dispositif selon la revendication 1,
**caractérisé en ce que**
la tige filetée (8) est conçue comme une tige de piston d'un cylindre hydraulique (6).

5. Dispositif selon la revendication 4,
**caractérisé en ce que**
le cylindre hydraulique (6) supporte l'élément de freinage (16) et l'écrou d'arrêt (9) pouvant être réglé ou déplacé de manière axiale et pouvant être déplacé en rotation par rapport au dit élément de freinage.

6. Dispositif selon la revendication 4,
**caractérisé en ce que**
le soulèvement de l'écrou d'arrêt (9) depuis sa position de freinage s'effectue par au moins un cylindre de levage (13).

7. Dispositif selon la revendication 7,
**caractérisé en ce que**
l'écrou d'arrêt (9) ou un élément entraîné en rotation par ce dernier est réalisé comme un émetteur de signaux pour un appareil de mesure de trajet (19).

8. Dispositif selon la revendication 7,
**caractérisé en ce que**
les appareils de mesure du trajet (19) de plusieurs systèmes de levage combinés les uns aux autres sont raccordés à un circuit de régulation commun afin de commander de façon synchronisée les systèmes de levage.
